# EUROPEAN PATENT SPECIFICATION

(11) **EP 2 217 424 B1**
(45) Date of publication and mention of the grant of the patent: **04.05.2016**
(21) Application number: 08806678.2
(22) Date of filing: 25.09.2008
(51) Int. Cl.: B29C 45/14, A42B 3/24, A61F 9/02

(54) **OVERLAY-VISOR**
VISIERAUFLAGE
VISIÈRE EN SUPERPOSITION

(30) Priority: 27.09.2007 GB 0718830
(43) Date of publication of application: 18.08.2010
(73) Proprietor: Pinlock Patent B.V., 8232 WL Lelystad (NL)
(72) Inventor: ARNOLD, Derek Leslie, NL-8303 ZV Emmeloord (NL)
(74) Representative: Hoyng Rokh Monegier LLP
(86) International application number: PCT/GB2008/050862
(87) International publication number: WO 2009/040581

(56) References cited:
- EP-A- 1 095 577
- DE-A1- 3 210 960
- JP-A- 2 060 940
- US-A- 6 009 564
- US-A1- 2006 010 572

## Description

### BACKGROUND OF THE INVENTION

### 1. Field of the Invention

The invention relates generally to an overlay-visor, such as is used in a visor-assembly comprising an overlay-visor and a shield-visor releasably attached to one another. The invention also relates to a visor assembly comprising an overlay-visor, a kit of parts comprising an overlay-visor, and a helmet comprising a visor assembly

More particularly the visor assemblies of the invention are for personal protection equipment for facial and eye protection. Examples of personal protection equipment include motorbike helmets, motorbike style helmets such as quad-bike, snowmobile, racing car and skiing helmets; heavy-duty protective visors, for example, ballistic face shields which may be used in riot helmets and visors for use by the emergency services; and goggles such as underwater diving goggles, motorcycle goggles or skiing goggles. Windows in vehicles and instrument covers exposed to the open air, and the like, can also make use of the technology according to the invention.

### 2. Description of the Related Art

Visor assemblies comprising a shield-visor with an overlay-visor releasably attached thereto by mechanical fastenings, are known.

In such visor assemblies the shield-visor is more substantial than the overlay-visor and acts as a shield. In the case of motorbike style helmets the shield-visor acts to protect a user's face from wind, rain, dirt and grit; and in the case of ballistic visors it acts to protect the user's face from more substantial projectiles and blows. In goggles the shield-visor tends to be limited to extending over the eyes and that part of face immediately adjacent the eyes. The shield-visor of the goggles may have different functions depending on usage. For example diving goggles are worn to aid underwater vision, motorcycle goggles are worn to protect a user's eyes from projectiles and dirt, and ballistic goggles are worn to protect a user's eyes from more substantial projectiles. Goggles may be provided with two shield-visors, one per eye.

Shield-visors may be provided in 1-dimensional (1-D) form, that is occupying a single plane so as to be flat; 2-dimensional (2-D) form, that is curved in one direction; or 3-dimensional (3-D) form, that is curved in two directions so as to be bowled. Overlay-visors may be provided in appropriate shapes to fit to the surfaces of these various shield-visor forms. In this respect, overlay-visors may also be 1-D, 2-D or 3-D. 1-D overlay-visors are used with 1-D shield-visors; 1-D and 2-D overlay-visors are used with 2-D shield-visors; and 3-D overlay-visors are used with 3-D shield-visors..

The overlay-visor is typically utilized to provide an improved viewing window for the visor wearer. For example, the overlay-visor may be adapted to have an anti-condensation function to prevent misting-up of the viewing area. The overlay-visor may also or alternatively be provided with tinting to give improved viewing in varying light conditions. The viewing area of the shield-visor and/or the overlay-visor is the area through which the user looks.

Examples of helmet visor assemblies are known from US Patent numbers US5765235 and US6922850 which provide anti-condensation overlay-visors attached to shield-visors.

In US6922850, prevention of misting-up of the viewing area is preferably achieved by provision of a chamber between an inner overlay-visor and a shield-visor. The chamber is filled with air or gas and acts to thermally insulate the internal surface of the overlay-visor from the external environment. The chamber is created by the provision of a flexible seal adhered to the overlay-visor and fitted detachably against the shield-visor so that the seal forms the peripheral boundary of the chamber. For the best anti-condensation results the chamber is sealed as far as possible with respect to the environment to prevent ingress of moisture and dirt to the chamber. In the preferred embodiment of US6922850 the seal is formed from a bead of silicone material adhered to the overlay-visor.

In a visor that is provided with a seal the viewing area is defined by the seal, which forms the boundary of the viewing area.

In order that the overlay-visor is detachable from the shield-visor, the silicone material is dry and set before it is brought into contact with the shield-visor. In this manner there is no adherence between the shield-visor and the spacer or seal so that the overlay-visor can be removed from the assembly or be replaced.

The current method of forming the overlay-visor with seal comprises applying a viscous silicone resin as an extruded bead of material along the periphery of a prefabricated overlay-visor using a computer numerical controlled (CNC) machine. The CNC machine controls a silicone dispensing nozzle which dispenses the bead of silicone resin under pressure onto the overlay-visor in the appropriate pattern. Once the resin has been applied to the overlay-visor, the bead dries/sets for between 24 to 48 hours depending upon the thickness of the spacer or seal and environmental conditions.

In such a process extremely accurate computer numerical control has to be utilised in order to achieve excellent bead placement, bead thickness and bead cross-section control. It has been identified by the inventor of the present invention that accurate control of the bead placement, bead thickness and bead cross-section are all essential to achieving a good seal to the chamber and hence a good anti-misting function of the overlay-visor. In order to achieve a highly effective seal, the dispenser speed, pressure, start and finishing points, and height of nozzle above the overlay-visor, all have to be synchronously coordinated. With such a process a number of problems occur.

The overlap at the start and finishing points for laying down the bead can cause problems with regards to optical quality of the final product as well as causing leakages into a sealed chamber because of a thickening or thinning of the bead at these points. The withdrawing of the nozzle can also lead to fowling of the nozzle.

The thickness and height of the completed set silicone bead cannot be guaranteed because the bead of silicone resin sets and flows differently according to the environmental conditions.

The viscosity of the silicone resin supplied to the CNC machine can vary between batches. This means that the thickness of the bead may vary depending on the batch of silicone resin. This may lead to overly thick or thin seals or spacers. Alternatively the viscosity of each batch of silicone resin must be tested and the CNC machine reprogrammed appropriately.

Once the silicone has been applied to the overlay-visor, it must be allowed to set in a controlled and dust free atmosphere for between 24 to 48 hours. If the drying room is not a clean room free of dust particles, these particles will irremovably ingress to the unset silicone resin. This leads to a poor optical quality of the set silicone and potentially poor sealing qualities.

For the drying process, costly covered stacking trays are needed to separate the sealed overlay-visors from each other horizontally and vertically.

Also in such a manufacturing process, great care has to be taken by the operator not to contact the unset silicone bead when handling the overlay-visor, in particular when removing the overlay-visor from the CNC machine. Any contact with the unset silicone bead will render the overlay-visor useless.

For these reasons the current manufacturing process is overly time consuming and too often produces a less than perfect spacer or seal.

Related patent documents EP 1 095 577 A2 and US 6,405,373 B1 discuss a visor for a helmet, particularly a motorcycle helmet, comprising an outer plastic pane and an inner plastic pane which are held spaced apart relative to one another through a sealing edge under inclusion of an air cushion. The sealed air cushion is attained via a silicone seal that is sprayed onto the outside of the inner pane.

DE3210960 (1983) discusses a double lens, in particular for a pair of ski goggles, having two transparent lenses, arranged at a distance from each other, it is provided that at least one lens has in the connecting region a peripheral perforation and in each case a peripheral edge bead is injection-moulded or foamed on both sides of the lens in such a way that the two edge beads are integrally connected via the openings of the perforation. This is said to achieve the object of providing such a double lens with flexibility while retaining a sealed inner space. The process results in the adhesive bonding of the lenses.

It is the aim of the invention to overcome one or more of the above problems.

### BRIEF SUMMARY OF THE INVENTION

According to the present invention there is provided an overlay-visor in accordance with claim 1, a visor assembly in accordance with claim 7, a kit of parts in accordance with claim 8, and a helmet in accordance with claim 9. The overlay-visor of the invention is made by injection molding a seal or spacer directly onto a visor.

Injection molding a seal or spacer directly onto a visor advantageously provides a visor having a seal or spacer adhered thereto, the method allowing a particularly accurate placement, sizing and/or shaping of the seal or spacer.

In a more preferred embodiment there is provided a method of forming a visor provided with a spacer or seal extending along at least a portion of a periphery of a viewing area of the visor, comprising the steps of;
i) providing a mold comprising a first cavity shaped as the inverse of the visor and a second cavity shaped as the inverse of the spacer or seal and positioned in relation to the first cavity to produce a seal or spacer at the periphery of the viewing area;
ii) providing a visor in the first cavity;
iii) injecting an elastomer resin into the second cavity; and
iv) removing the visor provided with spacer or seal from the mold.

In the above embodiments the elastomer resin is preferably set before removal from the mold. However, in some circumstances it may be removed while the elastomer resin is still unset or only partially set.

The visor on which the seal or spacer is formed is an overlay-visor. Provision on the overlay-visor allows retrofitting of an overlay-visor to a shield-visor and means that when a seal or spacer is damaged it is the less expensive overlay-visor which must be replaced and not the shield-visor.

A major advantage of the method is found in that the sizing and location of the spacer or seal on the visor is greatly more accurate with such a method than with the prior method. Very accurate control of the spacer or seal has been found by the inventor to be an important feature in producing a high quality visor assembly. This is because a lack of accuracy when producing the spacer or seal can result in overly thick or thin spacers which in turn leads to sub-optimal spacing of the overlay-visor and the shield-visor and to poor sealing of a chamber between the overlay-visor and the shield-visor. This in turn leads to more frequent misting of the viewing area of the visor assembly and to a dirtying of the internal surfaces of the chamber.

Accurate sizing and placement of the spacer or seal is particularly important when an airtight seal is to be provided. This is even more especially the case when the overlay-visor is located on the outer-surface of for example the shield-visor of a motorbike helmet. In such circumstances the seal must prevent ingress of water, moisture and dirt under driving conditions, when the overlay-visor is subjected to extreme wind pressures at high speeds.

With the method the seal or spacer size, and hence the distance between the overlay-visor and the shield-visor in a visor assembly, can be accurately and reliably controlled to optimise the anti-misting properties of the assembly. In the previous method such control was not possible leading to a sub-optimal spacing.

The use of an insulating air gap between the shield-visor and the overlay-visor provides good anti-misting properties without the need for electric heating elements as has been suggested in the prior art. The provision of electric heating elements is disadvantageous and it is hence preferred that the visor assembly of the present invention lacks electric heating elements.

It will be clear to those skilled in the art that the seal member may be provided at various locations on the overlay-visor so long as it encompasses an adequate viewing area for the visor user. For example the overlay-visor may be larger than the viewing area of the visor but the seal member located on the periphery of the viewing area, and thus not on the periphery of the overlay-visor.

The seal or spacer is formed from an elastomer resin. Examples of suitable elastomer resins for use in forming the spacer or seal include resins selected from the group consisting of silicone resins, epoxy resins and polyurethane resins. These may be thermoset or thermoplastic resins.

Preferably the resin is a thermoplastic silicone copolymer resin, which most preferably comprises at least 90% by weight of siloxane. Particular examples of such resins are Geniomer (RTM) 60 and Geniomer (RTM) 80 manufactured by Wacker-Chemie AG of Munich, Germany.

As an aid to improving the flow properties of the silicone resins, silica fume may be dispersed therethrough at a concentration of up to about 100ppm.

The elastomer resin used to form the spacer or seal is preferably a low-temperature setting resin. This advantageously allows the use of low mold temperatures. High mold temperatures may damage the optical qualities of the visor; cause undesired size or shape changes in the visor; or adversely affect surface coatings or finishes (e.g. anti-scratch or anti-misting coatings) on the visor. For example, preferred materials for an overlay-visor are cellulose acetate and cellulose propionate. An overlay-visor made of these materials may suffer damage at temperatures above 89°C and 98°C respectively.

The elastomeric resin is preferably selected to be usable with a mold temperature of 90°C or below, more preferably 70°C or below; even more preferably 60°C or below; and most preferably 50°C or below.

The step of injecting the elastomer resin is preferably carried out with a screw speed of 100 to 200 rpm and with a back pressure of 0.1 to 1MPa.

Another particular advantage of the use of injection molding to form the seal or spacer is found in the ability to form more complex structures than previously possible. The CNC dispensing method was only able to produce cross-sections similar to a spreading water droplet.

For example, in order to ensure a good sealing of the insulating chamber, the method may be adapted to produce a seal with two or more side by side ridges. These ridges may provide an improved sealing when biased against a visor surface of a visor assembly. The ridges may be substantially of the same height or one may extend further than the other. The production of the ridges is achieved by adapting the shape of the mold to the appropriate inverse of the desired seal or spacer shape.

Another example of a complex seal shape that can be formed by the method is a seal or spacer that is adapted to interact with a mechanical fastening element on the shield-visor to which the overlay-visor is to be attached. In this manner the releasable mechanical fastening elements of the visor assembly can be formed as part of the seal. For example one of two interlocking components can be provided on the overlay-visor and the complementary component can be provided on the shield-visor. One example of such an arrangement is an interlocking groove and ridge fastener; commonly known as a ziplock fastener or a grip fastener. Such fasteners may be provided so as to be fastened and released by direct finger force or may be provided with a slider which runs along the groove and ridge fastener to fasten or release the join.

Another example of a seal obtainable via the injection molding method is one which varies in height along its length. This can be useful in the instance where it is desirable for a visor assembly to have a varied spacing of the overlay-visor and the shield-visor. For example, in a motorbike helmet visor assembly it may be desirable to have a narrow spacing at the upper portion of the visor assembly and a deeper spacing at the lower portion of the visor assembly. This helps to avoid a scratching contact of the overlay-visor with the helmet components when lifting the visor assembly. In another embodiment the spacing may be greater at the side portions than in the central portion.

In a particular example a seal may be provided which is about 0.5mm in height along a first portion of a visor and is seamlessly graduated to 1mn at an opposed portion of the visor. In this manner a sealed chamber is provided with a gradually increasing spacing from one portion to another.

The invention relates to an overlay-visor, provided with a spacer of seal having two or more ridges for contacting the surface of another visor; to an overlay-visor, having a spacer or seal which is adapted to interact with a mechanical fastening element on another visor; and/or an overlay-visor, having a spacer or seal varying in height to provide a varying spacing between an overlay-visor and a shield visor; independently of their method of production.

The mold of the method is in the first instance shaped and positioned to produce a seal or spacer on only a first side of a visor. In other embodiments the mold may also be shaped and positioned to produce a seal or spacer on both a first and second surface of the visor. Providing the seal on both first and second surfaces of a visor allows the overlay-visor to be reversible and also to be placed optionally on the outside or inside surface of a shield-visor.

The mold may also be shaped and positioned to produce a seal or spacer on a portion of the edge of the overlay-visor. Most preferably the mold is adapted to produce a seal or spacer on a first and a second surface and on an edge of the overlay-visor.

A further advantage of the invention is found in that quick setting times in the range of less than 10 minutes, preferably less than 1 minute, more preferably less than 20 seconds and most preferably less than 10 seconds, can be achieved. This means that no extended setting times are required as was the case with the prior method. It also means that specialized drying rooms and racks are not required, and that the problem of operators contacting unset beads of resin is overcome.

The overlay-visor is in one embodiment provided as a visor prefabricated by cutting or milling from a sheet of material. Such a prefabricated visor may have been thermoformed into a 2-D or 3-D visor.

In another embodiment, in addition to injection molding the seal or spacer, the visor itself may be formed by injection molding. Injection molding of the visor may take place in the same mold in which the seal or spacer is injection molded in a multi-component molding process, usefully a two-component (2K) molding process. Alternatively the visor may be injection molded in a first mold and then have the seal or spacer added to it in a second mold.

It is most advantageous that the injection molding of both the visor and the seal or spacer be carried out in a single mold by multi-component injection molding, preferably a two-component (2K) molding technique. In 2K molding techniques three mold parts are used. Two parts of the mold, which produce a cavity the inverse of the first component, are used in the first stage of the process. Once the first component has been molded, one of the parts is removed and replaced with a third mold part. This third mold part contains an additional cavity that is the inverse of the second component.

In a two or multi-component method it is preferable that the first injection molded component is the visor and the second injection molded component is the seal. However, it is also possible to form the seal or spacer as the first injection molded component and to form the visor as the second injection molded component.

In some cases, for example where the seal or spacer is formed on both sides and the edge of the overlay-visor, a dual mold system may be used. A first mold is provided for forming the first component and the and a second mold is provided for adding the second component to the first component.

It is believed that injection molding of the overlay-visor produces an overlay-visor with an increased light transmission of approximately 1 to 2% compared to overlay-visors cut or milled from extruded sheets. This is important in ensuring that the visor assemblies of the invention meet the various governmental light transmission safety requirements. The increased optical quality is achieved because the molds are polished and optically corrected under computer control.

A multi-component or 2K injection molding process, similar to that described above, may be used to produce a shield-visor with a spacer or seal.

Further, in some instances it may be appropriate to make use of a 3 or more component injection molding process. For example, where the visor is itself injection molded and provided with seals or spacers on two sides, each of the seals or spacers may be formed from different materials. In such a situation a 3K injection molding process can be used.

For information, there is described an apparatus for implementing the above-described method. There is provided a mold for forming an overlay-visor, provided with a spacer or seal extending along at least a portion of a periphery of a viewing area of the visor, the mold comprising a cavity shaped as the inverse of the spacer or seal and adapted to be positioned in use, in relation to the visor to produce a seal or spacer at the periphery of the viewing area.

As discussed above, the cavity of the mold may be adapted in various ways to produce a variety of seal or spacer shapes including complex shapes.

According to the invention there is provided an overlay-visor adapted to be releasably attached to a shield-visor, comprising an injection molded spacer or seal extending along at least a portion of a periphery of a viewing area of the overlay-visor, wherein the spacer or seal is an elastomeric spacer or seal injection molded onto the overlay-visor.

In line with this aspect there is also provided a visor assembly, comprising a shield-visor having a surface; an overlay-visor as discussed; and a mechanical fastening for releasably attaching the overlay-visor to the surface of the shield-visor. Preferably the assembly comprises a seal spacing the overlay-visor from the shield-visor and forming a sealed chamber between the shield-visor and the overlay-visor.

Further there is provided a kit of parts comprising an overlay-visor as discussed; and a shield-visor.

The overlay-visor in any of the above embodiments may be provided with any of the preferred spacer or seal shapes and placements.

In particular there may be provided an overlay-visor adapted to be releasably attached to a shield-visor, comprising a spacer or seal extending along at least a portion of a periphery of a viewing area of the overlay-visor, the seal or spacer comprising two or more ridges for contacting a surface of a shield-visor; and/or the seal or spacer being shaped to connect to a mechanical fastening element on a shield-visor.

Also there may be provided an overlay-visor adapted to be releasably attached to a shield-visor, comprising a spacer or seal extending along at least a portion of a periphery of a viewing area of the overlay-visor, the seal or spacer being provided on an edge of the overlay-visor.

In a preferred embodiment the shield-visor of the visor assembly is provided with a recess shaped to receive an overlay-visor. The dimensions of the recess preferably correspond closely to the peripheral dimensions of the overlay-visor. The depth of the recess is preferably such that when the overlay-visor is inserted it sits substantially flush with the un-recessed part of the shield-visor. In such an embodiment securing means may be provided in the form of a snap-fit rim or the like around at least a part of the recess periphery.

The provision of the seal or spacer on the edge of the overlay-visor is advantageous in the assembly where the shield-visor is provided with a recess for the overlay-visor. The edge located, elastomeric spacer or seal abuts the sidewalls of the recess fitting the overlay-visor snugly therein so as to reduce or prevent movement of the overlay-visor. Even in the event that some shrinkage should occur in the overlay-visor the compressed elastomeric seal or spacer located along its edge will take up the created space and maintain a firm retention of the overlay-visor.

As discussed, the overlay-visor maintains a user's vision through the visor assembly. In relation to this the overlay-visor is preferably provided with an anti-misting surface, for example, in the form of a surface having hydrophilic properties. The surface may be applied as a coating of a hydrophilic material. The coating is preferably a silicone based material which is applied by dip-coating. More preferably the overlay-visor is also provided with an anti-misting surface on both of its major surfaces.

One advantage of providing the coating on both surfaces is found in that a single coated overlay-visor can be located on either the inside of the outside surface of a 1-D or 2-D shield-visor. Since the overlay-visor is coated on both sides, a hydrophilic surface is presented on the outersurface of the overlay-visor in whichever position it is placed. Hence a single overlay-visor can provide the hydrophilic anti-misting function whether placed on the inner or outer surface of a shield-visor.

The overlay-visor may also be provided with a colouring agent in the form of a permanent colouring or a photo-chromic UV reactive dye. This acts to reduce the ingress of excess light during, for example, sunny conditions, or to filter particular wavelengths of light.

The photo-chromic overlay-visor may take the form of a 3 ply laminate comprising two layers of polycarbonate and a central lamination adhesive impregnated with a powdered photo chromic dye. The percentage content of the dye can be varied as required in order to alter the level of shading of the overlay-visor in the activated state.

The overlay-visor may be provided with an anti-scratch coating, separately or in combination with an anti-misting surface, on either or both of it major surfaces. Preferably the overlay-visor is provided with an anti-misting surface on one side and an anti-scratch surface on the other side.

For curved shield-visors (2D and 3D), the overlay-visor may be provided on the inner concave surface of the shield-visor or on the outer convex surface of the shield-visor in order to prevent condensation formation on either the outside or the inside surface of the shield-visor. In a particular embodiment the shield-visor may be provided with both an inner overlay-visor and an outer overlay-visor, for environments where misting of both inner and outer shield-visor surfaces is likely to occur. This is particularly advantageous in the case where work in enclosed humid spaces may be expected. For example a ballistic visor, such as those worn by riot police or armed forces, may become misted on both outer and inner surfaces while waiting in a vehicle for orders to advance, or on entering a warm building after having been waiting in a cold environment.

In one embodiment of the invention the overlay-visor is adapted so that it can be fitted to both the inner surface and the outer surface of a shield-visor, for example on 1-D and 2-D shield-visors. This advantageously means that a single type of overlay-visor can be used as either an outer-overlay-visor or an inner overlay-visor. In an advantageous embodiment the overlay-visor may be provided with fastening portions on both of its major surfaces so that it can be fitted to either the inner or outer surface of a shield-visor. In addition the overlay-visor may be provided with spacer elements or seal elements on both of its major surfaces so that a single overlay-visor forms an air-gap whether placed on the outer surface or inner surface of a shield-visor.

In a preferred embodiment of the invention the overlay-visor is adapted to be fitted to the inner-surface of the shield-visor. Such an adaptation may, for example, be a shaping of the overlay-visor to fit the inner-surface of a recessed shield visor, the inner-surface of a 2-D shield-visor or the inner-surface of a 3-D shield-visor. More preferably the inner-surface of the shield-visor is provided with mechanical fastening elements for releasably attaching the overlay-visor thereto. A preferred embodiment of the visor assembly is one where the overlay-visor is provided on the inner-surface of the shield-visor.

According to a further aspect of the invention there is provided a helmet comprising; an opaque skull protection portion; and a visor assembly as discussed above.

The main body of the overlay-visor can be formed of a number of different materials, particularly preferred are polymeric resins. Examples of particularly preferred materials are cellulose propionate and cellulose acetate.

### BRIEF DESCRIPTION OF THE DRAWINGS

Specific embodiments of the invention will now be described by way of nonlimiting example only. The features and advantages of the invention will be further appreciated upon reference to the following drawings, in which:
Figure 1 shows a motorcycle style helmet provided with a visor assembly;
Figures 2, 2a and 2b show details of the visor assembly of FIG. 1;
Figures 3a to 3e show partial sections through overlay-visors with various spacer or seal forms;
Figures 4, 4a and 4b show a visor assembly having a shield-visor with a recess;
Figures 5a to 5d show a mold for injection molding of a seal;
Figures 6a and 6b show overlay visors with seals;
Figures 7a and 7b show a visor assembly having a ridge and groove attachment mechanism.

### DESCRIPTION OF ILLUSTRATIVE EMBODIMENTS

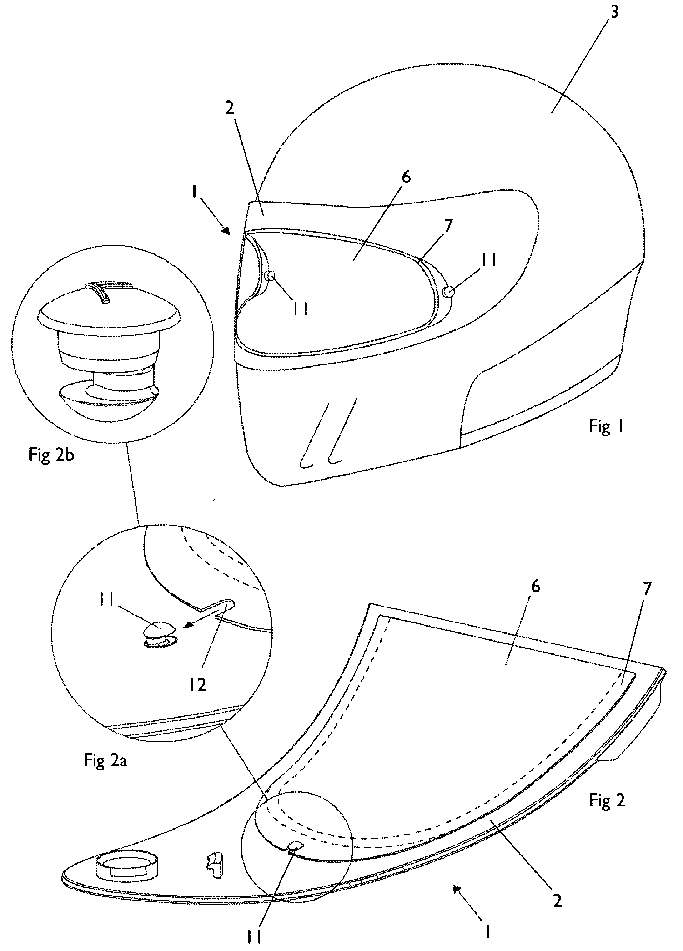

Figure 1 shows a motorcycle helmet having an opaque skull protecting portion 3 to which is attached a 3D visor assembly 1. There is provided a shield-visor 2 having releasably attached to its inner-surface an overlay-visor 6. The overlay-visor 6 is releasably attached to the shield-visor 2 by mechanical fastenings 11 at opposed ends of the shield-visor 2.

One of the mechanical fastenings 11 can be seen more clearly in figures 2, 2a and 2b. It is comprised of an eccentric pin 11 fitted to the shield-visor 2. The overlay-visor 6 is provided with a recess 12 which mates with the eccentric pin 11. The mechanical fastenings 11 hold the overlay-visor 6 under tension within the inner curve of the shield-visor 2. The eccentric pins 11 of this embodiment are rotatable into and out of engagement with the recesses 12 of the overlay-visor 6 in order to ensure a secure retention thereof. In the event that the overlay-visor 6 should reduce in size in relation to the shield-visor 2, the eccentric pins 11 can be tightened to re-secure the overlay-visor.

Also illustrated in figures 1 and 2 is a seal member 7 provided around the periphery of the overlay-visor 6. As a result of the presence of this seal the overlay-visor 6 is spaced from the shield-visor 2 and a chamber, sealed as far as possible with respect to the environment, is formed between the overlay-visor 6 and the shield-visor 2. This sealed chamber acts as an insulator reducing the possibility of condensation formation in the viewing area of the shield-visor 2.

The seal member 7 is adhered to the overlay-visor 6 and is held in non-adhesive relation to the shield-visor 2 by the mechanical fastening 11 so that it forms an airtight seal but does not adhere to the shield-visor 2. In this manner the overlay-visor 6 is removable from the shield-visor 2 so that it can be replaced if damaged, or removed or replaced depending upon weather conditions.

In one embodiment (not shown) the seal 7 may overlap slightly into the recess 12 so as to provide a resilient cushion abutting mechanical retaining pins.

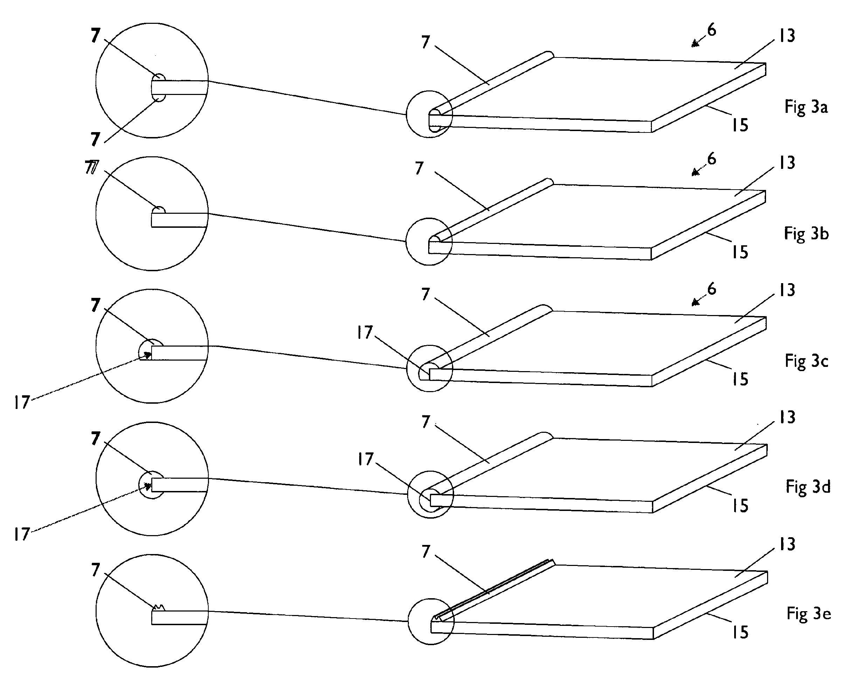

Figures 3a to 3d show partial sections through overlay-visors 6 provided with seal members 7.

In figure 3a the seal member 7 is provided on both a first surface 13 and a second surface 15 of the overlay-visor 6.

In figure 3b the seal member 7 is applied to only a first surface 13 of the overlay-visor 6.

In figure 3c the seal member 7 is provided on both a first surface 13 and the edge 17 of the overlay-visor 6.

In figure 3d the seal member 7 is provided on the first surface 13 and the second surface 15 as well as on the edge 17 of the overlay-visor 6.

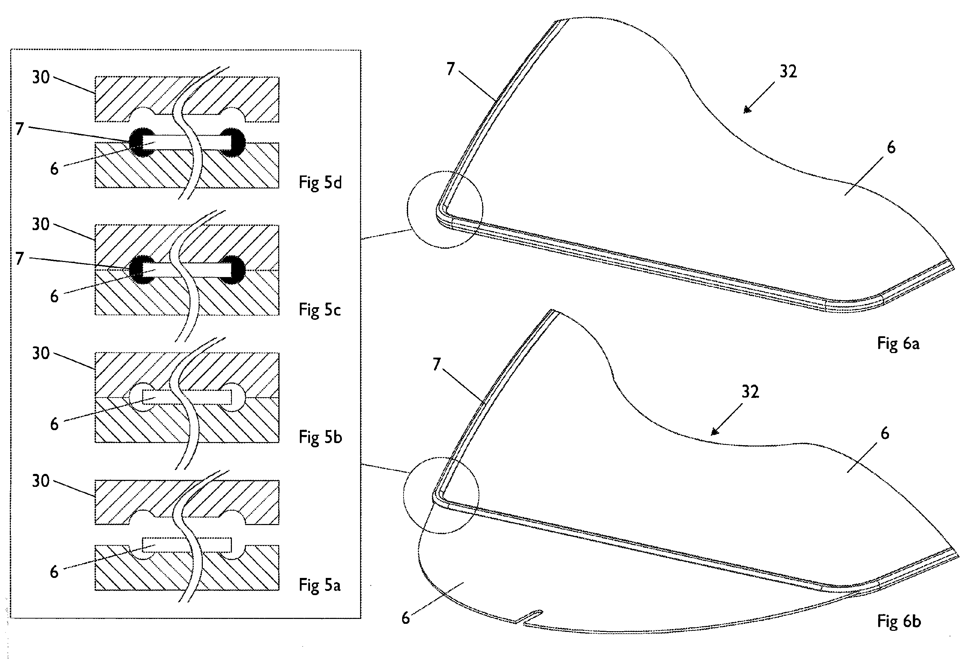

In figure 5e the seal member 7 is provided on the first surface 13 of the overlay-visor 6 and is formed with a double ridge construction. Such a double ridge may be useful in providing an improved sealing of the chamber.

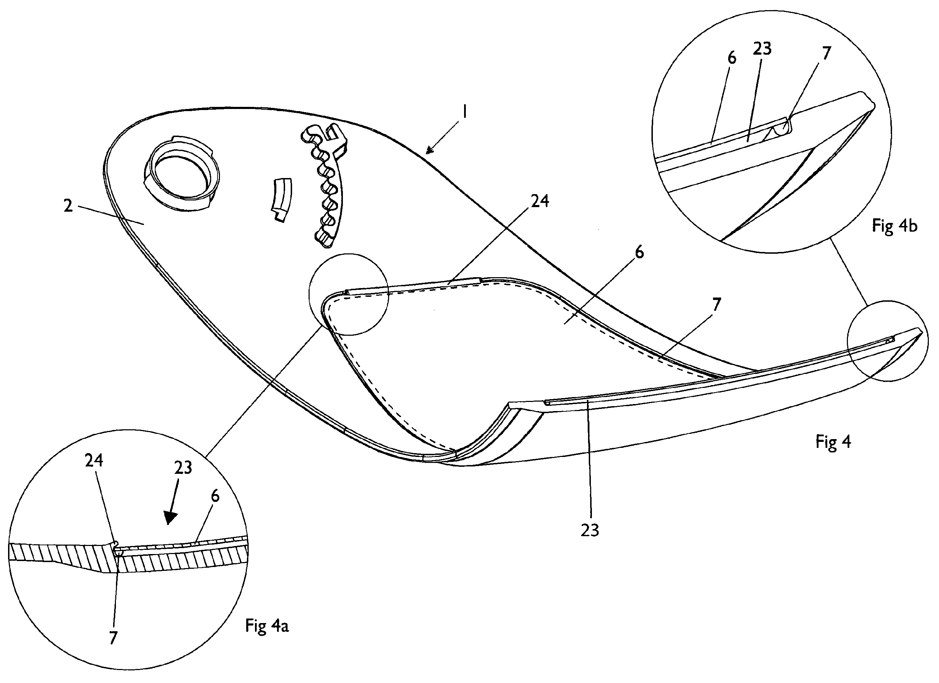

In figures 4 and 4a there is shown a visor assembly 1 in which the shield-visor 2 is provided with a recess 23. The dimensions of the recess correspond to the external dimensions of the overlay-visor 6. The fastening in this embodiment is achieved by a snap-fit construction comprising snap-lips 24. This pushes the overlay-visor 6 against the shield-visor 2 with some pretension. Seal member 7 provides a seal between the overlay-visor 6 and the shield-visor 2, as a result of which ingress of moisture, and consequently misting up of the shield-visor 2, can be avoided.

The overlay-visors is manufactured by a process in which the seal 7 is injection molded directly onto the overlay-visor 6. In such a process use is made of a mold 30. Partial cross-sections of a mold are shown in figures 5a to 5d. The mold has a first cavity shaped to receive a prefabricated overlay-visor 6. The mold is also provided with a second cavity which as can be seen in the figure is shaped as the inverse of the desired seal shape 7, and is placed in relation to the first cavity such that the seal is formed on the periphery of the viewing area of the overlay-visor 6. The mold shown in figures 5a to 5d is adapted to provide a seal on both surfaces and the edge of the overlay-visor.

In the method a prefabricated overlay-visor is placed into the first cavity of the mold and the mold is closed as in figures 5a and 5b. Geniomer (RTM) 60 or 80, produced by Wacker-Chemie AG of Munich Hamburg, which is a low temperature, quick-setting, thermoplastic silicone resin having greater than 90% siloxane content, is then injected into the second cavity of the mold; figurue 5c. The mold is held at a temperature of 20-50°C for the injection step.

Following the injection step the injection resin is allowed to set for 10 to 20 seconds and then the overlay-visor with seal or spacer is removed from the mold; figure 5d.

For Geniomer (RTM) 60 the following injection molding conditions are used:

| | |
|---|---|
| Melt Temperature | 100 - 170°C |
| | 1 100 - 120°C |
| Barrel Temperatures | 2 140 - 160°C |
| | 3 140 - 160°C |
| | Die 140 - 160°C |
| Mold Temperature | 20 - 50°C |
| Screw speed (general purpose screw) | 100 - 200 rpm |
| Cooling time | 10-20 sec |
| Back Pressure | 0.1 - 1MPa |

For Geniomer 80 the following injection molding conditions are used:

| | |
|---|---|
| Melt Temperature | 185 - 200°C |
| | Rear 100 - 170°C |
| Barrel Temperatures | Middle 170 - 200°C |
| | Front 180 - 200°C |
| | Nozzle 185 - 200°C |
| Mold Temperature | 20 - 50°C |
| Screw speed (general purpose screw) | 100 - 200 rpm |
| Cooling time | 10-20 sec |
| Back Pressure | 0.1 - 1MPa |

Figures 6a and 6b show examples of overlay-visors which may be produced from molds in accordance with figures 5a to 5d. In figure 6a the seal 7 extends around the periphery of the overlay-visor 6 on both its surfaces 13, 15 and its edge 17. In figure 6b, the seal extends around the periphery of a viewing area 32, but not around the whole of the periphery the overlay-visor 6. In such an embodiment the second cavity in the mold 6 is shaped and located appropriately to provide such a seal 7.

The over-lay visor is provided as a prefabricated component and is either cut or milled from an extruded sheet; or is injection molded.

In an alternative embodiment (not shown) a multi-component injection molding process is used to form the overlay-visor. In this process the overlay-visor is injection molded into the same mold in which the seal is formed.

Alternative shapes to those shown in figures 5a to 5d of the second cavity of the mold are used to provide alternative seal shapes and cross-sections, examples of which are shown in figures 3a to 3d.

Preferably a coating, for example an anti-misting coating, is provided on a prefabricated the overlay-visor prior to insertion into the mold. However, it is also possible that a coating is provided on the overlay-visor (prefabricated or multi-component injection molded) after the seal or spacer has been applied. This is done by dipping the overlay-visor in a vat of the appropriate coating.

For information, in an alternative (not shown) a seal 7 or spacer may be provided on the shield-visor rather than on the overlay-visor. Similarly to the overlay-visor the seal may be provided by injection molding onto a prefabricated shield-visor or by multi-component injection molding of the shield-visor and seal or spacer.

An overlay-visor not provided with a seal or spacer is placed over the seal to create an insulating gap or chamber. Hence a similar anti-misting effect can be achieved as with the above described embodiments. However, this is less preferred because on suffering damage to the spacer or seal the shield-visor must be discarded. Since the shield-visor is typically more expensive than the overlay-visor, it is preferred that in the event of damage to the seal it is the overlay-visor that is discarded.

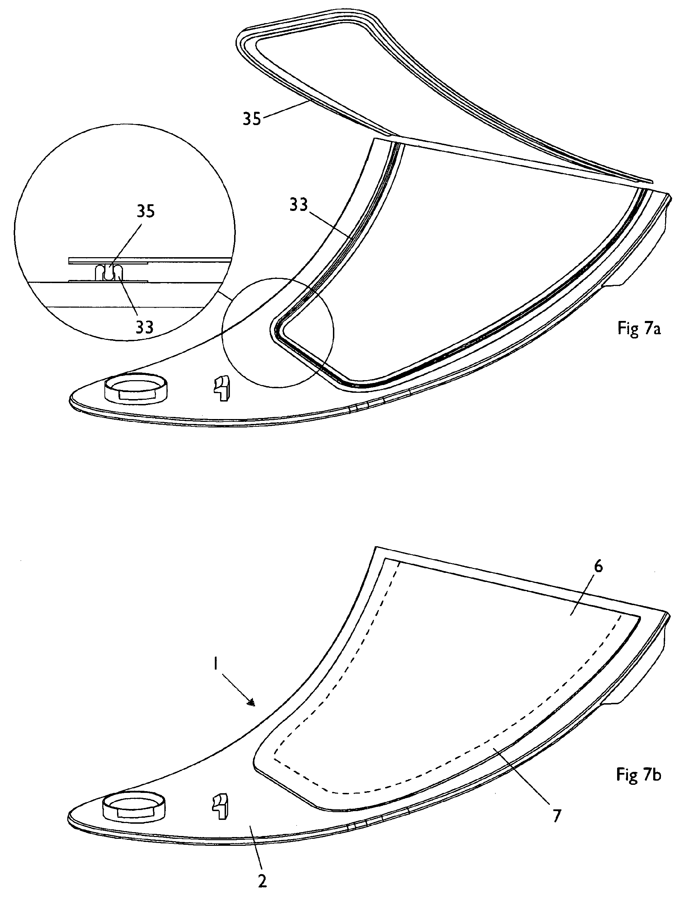

A preferred embodiment of the invention is shown in figures 7a and 7b, in which an interlocking groove 33 and ridge 35 fastening system has been formed for releasably fastening the overlay-visor 6 to the shield visor 2. In this embodiment the seal 7 on the overlay-visor 6 is injection molded as a ridge 35 which mates with a groove shaped fastening element 33 on the shield visor 2. The groove shaped element 33 on the shield visor may be injection molded onto the shield-visor 2, may be adhered thereto as a preformed element, or may be integrally formed with the shield-visor 2. The ridge and the groove elements may be formed from the same or different materials as one another. In such an embodiment the overlay-visor is fastened to the shield-visor by pressing the ridge into the groove (figure 7b).

Many modifications in addition to those described above may be made to the structures and techniques described herein without departing from the scope of the invention. Accordingly, although specific embodiments have been described, these are examples only and are not limiting upon the scope of the invention, as defined by the appended claims.

It should be noted that the term "comprising" as used in the claims or description of this application does not exclude other elements or steps; and the terms "a" and "an" do not exclude a plurality.

## Claims

1. An overlay-visor (6) adapted to be releasably attached to a shield-visor (2), comprising a spacer or seal (7) extending along at least a portion of a periphery of a viewing area (32) of the overlay-visor (6), **characterized in that** said spacer or seal (7) is an elastomeric spacer or seal injection molded onto the overlay-visor.

2. An overlay-visor (6) according to claim 1 wherein the spacer (7) or the seal comprises two or more ridges for contacting a surface of a shield-visor (2); or the spacer or the seal (7) is shaped to interact with a mechanical fastening element on a shield-visor (2), for example an interlocking groove (33) and ridge (35) fastening mechanism.

3. An overlay-visor (6) according to any of claims 1 to 2 wherein the seal (7) or spacer is provided on both a first (13) and second (15) surface of the overlay-visor (6); or on a first (13) or a second (15) surface and on an edge (17) of the overlay-visor (6); or more preferably on a first (13) and a second (15) surface and on an edge (17) of the overlay-visor (6).

4. The overlay-visor (6) according to any of claims 1 to 3 wherein the overlay-visor (6) is provided with a hydrophilic surface, or photochromic shading, preferably in the form of a photochromic dye, or an anti-scratch surface.

5. The overlay-visor (6) of any of claims 1 to 4 wherein the overlay-visor (6) is injection molded.

6. The overlay-visor (6) of any of claims 1 to 5 wherein the overlay-visor (6) is adapted to be placed on an inner surface of the shield visor(2), or is adapted to be placed on an outer surface of the shield visor (2).

7. A visor assembly (1), comprising
a shield-visor (2) having a surface;
an overlay-visor (6) according to any of claims 1 to 6; and
a mechanical fastening (11, 24, 33) for releasably attaching the overlay-visor (6) to the surface of the shield-visor (2).

8. A kit of parts comprising;
an overlay-visor (6) according to any of claims 1 to 6; and
a shield-visor (2), preferably the shield-visor (2) comprises an inner-surface provided with mechanical fastening elements (11, 24, 33) for retaining the overlay-visor.

9. A helmet comprising;
an opaque skull protection portion (3); and
a visor assembly (1) according to claim 7 attached thereto.

## Patentansprüche

1. Visierauflage (6), die lösbar an einem Schutzvisier (2) befestigt werden kann, umfassend einen Abstandshalter oder eine Dichtung (7), der oder die sich entlang wenigstens eines Teils eines Umfangs eines Sichtbereichs (32) der Visierauflage (6) erstreckt, **dadurch gekennzeichnet, dass** der Abstandshalter oder die Dichtung (7) ein elastomerer Abstandshalter oder eine elastomere Dichtung ist, der oder die durch Spritzguss auf die Visierauflage aufgebracht ist.

2. Visierauflage (6) gemäß Anspruch 1, wobei der Abstandshalter (7) oder die Dichtung zwei oder mehr Grate zum Kontakt mit einer Fläche eines Schutzvisiers (2) umfasst oder der Abstandshalter oder die Dichtung (7) so geformt ist, dass er oder sie mit einem mechanischen Befestigungselement auf einem Schutzvisier (2), zum Beispiel einem Befestigungsmechanismus mit ineinandergreifenden Nuten (33) und Graten (35), wechselwirkt.

3. Visierauflage (6) gemäß einem der Ansprüche 1 bis 2, wobei der Dichtung (7) oder die Abstandshalter sowohl auf einer ersten (13) als auch auf einer zweiten (15) Fläche der Visierauflage (6); oder auf einer ersten (13) oder einer zweiten (15) Fläche und auf einer Kante (17) der Visierauflage (6); oder besonders bevorzugt auf einer ersten (13) und einer zweiten (15) Fläche und auf einer Kante (17) der Visierauflage (6) vorhanden ist.

4. Visierauflage (6) gemäß einem der Ansprüche 1 bis 3, wobei die Visierauflage (6) mit einer hydrophilen Oberfläche oder einer photochromen Tönung, vorzugsweise in Form eines photochromen Farbstoffs, oder einer kratzfesten Oberfläche versehen ist.

5. Visierauflage (6) gemäß einem der Ansprüche 1 bis 4, wobei die Visierauflage (6) spritzgegossen ist.

6. Visierauflage (6) gemäß einem der Ansprüche 1 bis 5, wobei die Visierauflage (6) auf eine Innenfläche des Schutzvisiers (2) aufgesetzt werden kann oder auf eine Außenfläche des Schutzvisiers (2) aufgesetzt werden kann.

7. Visierbaugruppe (1), umfassend
ein Schutzvisier (2) mit einer Fläche;
eine Visierauflage (6) gemäß einem der Ansprüche 1 bis 6; und
eine mechanische Befestigung (11, 24, 33) zum lösbaren Befestigen der Visierauflage (6) auf der Fläche des Schutzvisiers (2).

8. Zusammenstellung, umfassend
eine Visierauflage (6) gemäß einem der Ansprüche 1 bis 6; und
ein Schutzvisier (2), wobei vorzugsweise das Schutzvisier (2) eine Innenfläche umfasst, die mit mechanischen Befestigungselementen (11, 24, 33) zum Halten der Visierauflage versehen ist.

9. Helm, umfassend:
einen undurchsichtigen Schädelschutzteil (3); und
eine daran befestigte Visierbaugruppe (1) gemäß Anspruch 7.

## Revendications

1. Survisière (6) conçue pour être arrimée de façon amovible à une visière de protection (2), comprenant un espaceur ou joint (7) s'étendant le long d'au moins une portion d'une périphérie d'une zone de visualisation (32) de la survisière (6), **caractérisée en ce que** ledit espaceur ou joint (7) est un espaceur ou joint élastomère moulé par injection sur la survisière.

2. Survisière (6) selon la revendication 1, dans laquelle l'espaceur (7) ou le joint comprend deux stries ou plus destinées à un contact avec une surface d'une visière de protection (2) ; ou l'espaceur ou le joint (7) est façonné de façon à interagir avec un élément de fixation mécanique sur une visière de protection (2), par exemple un mécanisme de fixation par imbrication de rainures (33) et de nervures (35).

3. Survisière (6) selon l'une quelconque des revendications 1 à 2, dans laquelle le joint (7) ou l'espaceur est ménagé à la fois sur une première (13) et une seconde (15) surface de la survisière (6) ; ou sur une première (13) ou une seconde (15) surface et sur un bord (17) de la survisière (6) ; ou de manière davantage préférée sur une première (13) et une seconde (15) surface et sur un bord (17) de la survisière (6).

4. Survisière (6) selon l'une quelconque des revendications 1 à 3, dans laquelle la survisière (6) est dotée d'une surface hydrophile, ou d'un ombrage photochromique, de préférence sous la forme d'une teinte photochromique, ou d'une surface antirayure.

5. Survisière (6) selon l'une quelconque des revendications 1 à 4, dans laquelle la survisière (6) est moulée par injection.

6. Survisière (6) selon l'une quelconque des revendications 1 à 5, dans laquelle la survisière (6) est conçue pour être placée sur une surface interne de la visière de protection (2), ou est conçue pour être placée sur une surface externe de la visière de protection (2).

7. Ensemble de visière (1), comprenant
une visière de protection (2) ayant une surface ;
une survisière (6) selon l'une quelconque des revendications 1 à 6 ; et
une fixation mécanique (11, 24, 33) destinée à arrimer de façon amovible la survisière (6) sur la surface de la visière de protection (2).

8. Kit de pièces comprenant :
une survisière (6) selon l'une quelconque des revendications 1 à 6 ; et
une visière de protection (2), la visière de protection (2) comprenant de préférence une surface interne dotée d'éléments de fixation mécanique (11, 24, 33) destinés à retenir la survisière.

9. Casque, comprenant :
une portion de protection de crâne opaque (3) ; et
un ensemble de visière (1) selon la revendication 7 arrimé à celle-ci.
